Europäisches Patentamt

European Patent Office

Office européen des brevets

(11) Veröffentlichungsnummer: **0 308 653 B1**

(12) **EUROPÄISCHE PATENTSCHRIFT**

(45) Veröffentlichungstag der Patentschrift: **24.03.93**

(21) Anmeldenummer: **88113473.8**

(22) Anmeldetag: **19.08.88**

(51) Int. Cl.⁵: **H02J 7/10**

(54) **Ladeverfahren für wartungsfreie Bleibatterien mit festgelegtem Elektrolyten.**

(30) Priorität: **25.09.87 DE 3732339**

(43) Veröffentlichungstag der Anmeldung:
**29.03.89 Patentblatt  89/13**

(45) Bekanntmachung des Hinweises auf die
Patenterteilung:
**24.03.93 Patentblatt  93/12**

(84) Benannte Vertragsstaaten:
**AT BE DE ES FR GB IT NL SE**

(56) Entgegenhaltungen:
**DE-C- 973 078**
**FR-A- 2 326 052**
**GB-A- 2 086 674**
**US-A- 4 209 736**

(73) Patentinhaber: **VARTA Batterie Aktiengesellschaft**
**Am Leineufer 51**
**W-3000 Hannover 21(DE)**

(72) Erfinder: **Horn, Karl Georg, Dr. Dipl.-Phys.**
**An den Römergärten 16**
**W-6233 Kelkheim(DE)**

(74) Vertreter: **Kaiser, Dieter Ralf, Dipl.-Ing.**
**Gundelhardtstrasse 72**
**W-6233 Kelkheim/Ts. (DE)**

## Beschreibung

Die Erfindung betrifft ein Verfahren zum schnellen Aufladen von wartungsfreien Bleibatterien mit festgelegtem Elektrolyten.

Der erreichte technische Fertigungsstandard wartungsfreier Bleibatterien, die ein nahezu gasdichtes und vor allem lageunabhängiges Arbeiten gestatten, hat dem Bleiakkumulator viele spezielle Einsatzgebiete und Benutzer neu hinzugewonnen. Zu dem gestiegenen Benutzungskomfort gehört nicht zuletzt auch die Möglichkeit, daß die wartungsfreie Batterie mit relativ hohen Strömen aufgeladen werden kann, um innerhalb weniger Stunden wieder voll zur Verfügung zu stehen. Hierbei tragen die konventionellen Ladeverfahren den besonderen Gegebenheiten von Zellen mit festgelegtem Elektrolyten jedoch nicht in genügendem Maße Rechnung.

Für die Schnelladung von Bleizellen mit flüssigem Elektrolyten ist im allgemeinen die bekannte Zweistufenladung nach IU-Kennlinie ausreichend: in der ersten Stufe Ladung mit einem hohen, konstanten Strom I bis zur einsetzenden Gasung bei der Spannung U, in der zweiten Stufe unter Konstanthaltung der Zellenspannung U von ca. 2,4 Volt Weiterladung, bis der durch die konstante Ladespannung aufgezwungene Strom bis auf etwa 1/20 des fünfstündigen Entladestroms abgefallen ist.

Ein Vorteil dieser Ladenmethode für Zellen mit flüssigem Elektrolyten liegt darin, daß der Anfangsladezustand ein beliebiger sein kann und daß man in jedem Fall eine vollgeladene Zelle erhält.

Mit dem Übergang von der ersten zur zweiten Ladestufe wird die Ladereaktion

$$PbSO_4 + 2 H_2O \rightarrow PbO_2 + H_2SO_4 + 2 H^+ + 2 e^- \quad (1)$$

der positiven Elektrode in steigendem Ausmaß von der Nebenreaktion

$$H_2O \rightarrow 1/2 O_2 + 2 H^+ + 2 e^- \quad (2)$$

und die Ladereaktion

$$PbSO_4 + 2 H^+ + 2 e^- \rightarrow Pb + H_2SO_4 \quad (3)$$

der negativen Elektrode in steigendem Ausmaß von der Nebenreaktion

$$2 H^+ + 2 e^- \rightarrow H_2 \quad (4)$$

begleitet. Beide Nebenreaktionen, welche eine Wasserzersetzung darstellen, sind mit einem Potentialhub, an der positiven Elektrode noch weiter in die positive und an der negativen Elektrode in die negative Richtung, verbunden, wodurch die während der zweiten Ladestufe konstant zu haltende Zellenspannung erreicht wird. Die Potentialhübe eignen sich daher, indem sie die Ablösung der eigentlichen Ladereaktionen (1), (3) durch die parasitären Nebenreaktionen (2), (4) anzeigen, als Steuergrößen zum Umschalten von der Konstantstromladung auf die Konstantspannungsladung bei dem Zweistufenverfahren für Zellen mit flüssigem Elektrolyten.

Im Falle wartungsfreier Bleibatterien mit festgelegtem Elektrolyten tritt als parasitäre Nebenreaktion an der negativen Elektrode im wesentlichen Sauerstoffreduktion auf. Der in offenen Zellen deutliche Potentialabfall der Negativen entfällt. Deshalb hat das vorbeschriebene Ladeverfahren nicht immer befriedigt und Erfahrungen zeigten, daß im Laufe des Zyklenbetriebes die Zellenkapazität abfällt und daß das Defizit durch längeres Überladen auch nicht ausgeglichen werden kann, ohne daß ein zusätzlicher Wasser-(Elektrolyt-) Verlust entsteht.

Aus Firmenprospekten von Herstellern wartungsfreier Bleibatterien lassen sich modifizierte Lademethoden entnehmen, die in der Regel nur an bestimmte Baureihen von Akkumulatoren hinlänglich angepaßt sind. Dabei liegen zwischen diesen oft sehr unterschiedliche Konstruktionsmerkmale vor, zu denen auch die Art der Elektrolytfixierung, sei es durch Gelifizierung oder mittels hochsaugfähigem Vlies, zählt.

So wird u.a. in Abwandlung der IU-Ladung eine dreistufige $I_1UI_2$-Ladetechnik praktiziert, deren Besonderheit die ist, daß in der spannungsgesteuerten Ladephase, die nur kurz ist, nicht bis zum Abklingen des selbstregelnden Ladestromes gewartet wird, sondern daß, wenn dieser auf einen definierten Wert (bestimmter Prozentsatz des fünfstündigen Ladestromes) abgefallen ist, mit diesem konstantgehaltenen Strom $I_2$ bis zum Ende der vorgesehenen Gesamtladezeit weitergeladen wird. Die Gesamtladezeit beträgt, wenn z.B. $I_2$ = 80% des fünfstündigen Stromes und die Zelle vorher vollständig entladen war, 13 bis 15 Stunden.

In der deutschen Patentschrift DE-C-973 078 ist ein ähnliches Dreistufenverfahren beschrieben, bei dem die dritte Stufe (Nachladeperiode) nach einer vorgegebenen Dauer beendet wird.

Ferner sind zwei Ladeverfahren bekannt, von denen das eine mit einem durchwegs konstanten Ladestrom, das andere mit einer durchwegs konstanten Ladespannung arbeitet. Das erste Verfahren ist kostengünstig und wird für gasdichte alkalische Batterien verbreitet angewendet. Beim verschlossenen Bleiakkumulator kann durch die unkontrollierte Einladung ein erhöhter Wasserverlust entstehen. Bei Konstantspannungs-Ladeverfahren ist auch schon vorgeschlagen worden, die Ladespannung laufend an die Batterietemperatur anzupassen und bei Unterschreiten eines bestimmten Ladestromes eine Nachladeperiode vorgebbarer Zeitdauer anzuschließen (US-A-4 209 736).

Bei konstanter Ladespannung müßte die einspeisende Spannung nach dem charakteristischen Lade- und Temperaturverhalten der Batterie eingerichtet werden. Andernfalls kommt es zu Überladung mit evtl. erhöhtem Wasserverbrauch oder unterschüssiger Ladung.

Diese und weitere Lademethoden für gasdichte Bleizellen sind auch der Art ihres Einsatzes, bei dem sie zyklisch belastet werden oder im Bereitschaftsdienst unter Ladeerhaltung stehen, nicht immer gleich günstig angemessen.

Der Erfindung liegt daher die Aufgabe zugrunde, ein Ladeverfahren für verschlossene Bleibatterien anzugeben, welches ohne besonderen Geräteaufwand zu einer sicheren und schnellen Volladung führt, wobei auch der Wasserverbrauch minimiert und damit eine lange Lebensdauer gewährleistet werden soll. Diese Aufgabe wird erfindungsgemäß mit den im kennzeichnenden Teil des Anspruchs 1 angegebenen Mitteln gelöst.

Zur besseren Übersicht wird das Verfahren anhand zweier Graphiken erläutert:

Figur 1 zeigt den Verlauf der Ladespannung und des Ladestromes in den drei Zeitstufen des Verfahrens.

Figur 2 zeigt ein U/T-Kennlinienfeld als Regelungsgrundlage für die temperaturabhängige Ladespannung.

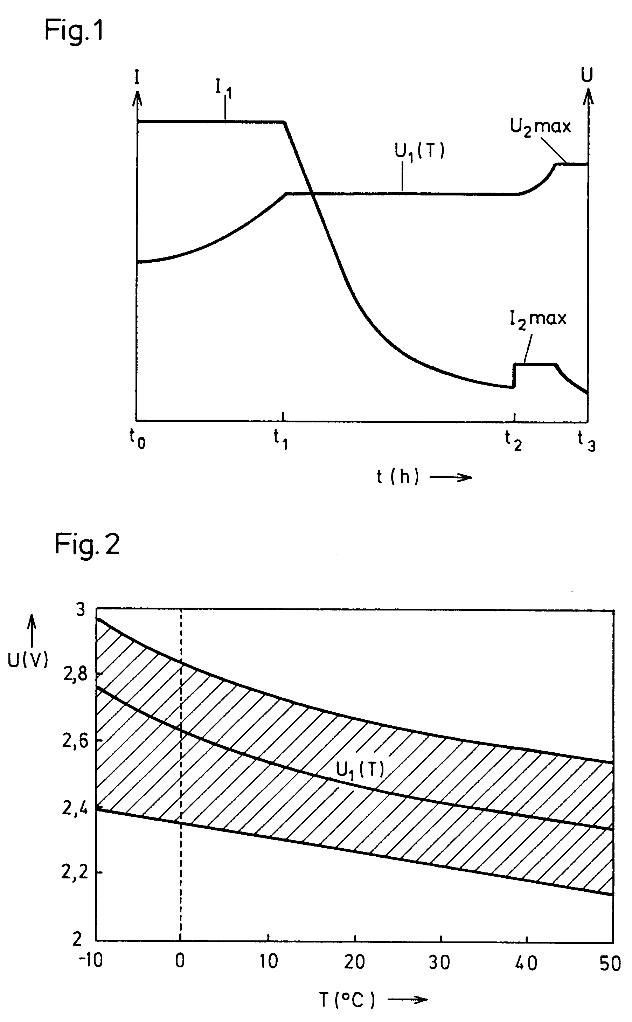

Nach Figur 1 erfolgt die Ladung in der ersten Stufe analog der bekannten IU-Kennlinie mit einem konstanten Ladestrom $I_1$ von der Größe des 4- bis 8stündigen Entladestromes, welcher bis zum Erreichen einer vorgegebenen temperaturgeregelten Ladespannung $U_1(T)$ von ca. 2,45 Volt bei 25°C nutzbar aufgenommen und gespeichert werden kann. Zum Zeitpunkt $t_1$ ist die erste Ladestufe beendet.

Auf diesem Spannungsniveau wird nunmehr bis zum Zeitpunkt $t_2$ weitergeladen, wobei jedoch während dieser zweiten Ladestufe die Ladespannung erfindungsgemäß laufend an die Batterietemperatur angepaßt werden soll.

Der Temperaturkoeffizient der Spannung wird vom Batteriehersteller angegeben und beträgt bei Temperaturen ab 25°C etwa -4 mV/Grad. Für die temperaturabhängige Ladespannung $U_1(T)$ gilt dann in der zweiten Ladestufe für $T \geq 25°C$

$$U_1(T) = 2,45 - 0,004 \cdot (T-25) \text{ Volt}$$

mit T = Batterietemperatur in °C.

Aus dem Verlauf der Spannungs-/Temperatur-Kennlinie (Figur 2) ist ersichtlich, daß zu tieferen Temperaturen hin der Temperaturkoeffizient größer wird aufgrund der schlechteren Stromaufnahme der Bleizellen.

Die spannungsgesteuerte Weiterladung in der Zeitstufe $t_1$ - $t_2$ setzt daher die laufende Messung der Batterietemperatur an geeigneter Stelle voraus, wobei mit den erhaltenen Meßwerten die Ladespannung $U_1(T)$ korrelieren muß. Am besten wird die Temperatur im Innern einer repäsentativen Zellen, zwischen zwei Zellen der Batterie oder auf dem Polverbinder zweier Zellen gemessen.

Die Nachregelung der Lade- bzw. Steuerspannung nach Maßgabe der Batterietemperatur übernimmt das Ladegerät anhand einer Spannungs-/Temperatur-Kennlinie, die einmal aus experimentell ermittelten Wertepaaren der Zellenspannung und Temperatur gewonnen wurde und diesem eingegeben worden ist.

Selbstverständlich gilt die so erhaltene Kennlinie $U_1(T)$ innerhalb einer gewissen Bandbreite von vorgesehenen Ladeströmen wegen der wechselseitigen Abhängigkeit von U and I exakt nur für einen ausgewählten, z.B. den fünfstündigen Strom. Das Ladegerät bedient sich daher eines mehr oder weniger breiten Kennlinienfeldes als Regelungsgrundlage, wie es in Figur 2 dargestellt ist. Bei diesem Kennlienienfeld stellen die obere und untere Kurve die stromstärkebedingten Begrenzungen für die Ladespannung dar.

Als Folge der abnehmenden Fähigkeit der Batterie zur Ladungsaufnahme klingt in der zweiten Ladestufe der nunmehr selbstregelnde Ladestrom entsprechend dem fallenden I-Ast (Figur 1) ab, wobei seine Stärke noch gewissen Schwankungen unterliegt, die sich aus den Regeländerungen der Steuerspannung $U_1(T)$ ergeben (in der Figur nicht dargestellt).

Die zweite Ladestufe endet zeitbegrenzt bei $t_2$. Ihre Dauer ist so zu bemessen, daß die Gesamtladezeit von erster und zweiter Stufe, $t_0$ - $t_2$, 4 bis 10 Stunden, vorzugsweise 5 bis 8 Stunden beträgt. Davon entfallen ca. 3 Stunden auf die erste Ladestufe.

Mit einer erfindungsgemäßen dritten Stufe, die sich über das Zeitintervall $t_2$ - $t_3$ erstreckt und ebenfalls zeitbegrenzt ist, wird eine Nachladung durchgeführt, um eine Volladung beider Elektroden zu erreichen. Diese Nachladung folgt ähnlich den beiden ersten Ladestufen einer IU-Kennlinie mit temperaturgeregeltem U, bei der I und U jeweils auf vom Ladegerät vorgegebene Höchstwerte, $I_2$ max und $U_2$ max, begrenzt sind. Eine zeitliche Begrenzung, wie eben schon erwähnt, kommt hinzu.

Mit diesen Vorgaben kann der Verlauf der Strom-Spannungskurve während der Nachladung dreierlei unterschiedliche Gestalt annehmen, wobei es letztlich vom Ladezustand der Batterie zum Zeitpunkt $t_2$ abhängt, wie die Nachladung abläuft.

In der Figur 1 ist der allgemeine fall dargestellt:

Bei $t_2$ bietet das Ladegerät eine gegenüber $U_1$-(T) um 50 bis 200 mV, vorzugsweise um ca. 120 mV erhöhte Ladespannung $U_2$ max an, wobei die Differenz $\Delta U$ etwa 2 bis 8%, vorzugsweise ca. 5% einer Ladespannung von 2,45 Volt entspricht. $U_2$ max ist ebenfalls temperaturgeregelt, so daß im vorzugsweisen Fall näherungsweise gilt:

$$U_2 \ max = U_1(T) + \Delta U = 2,57 - 0,004 \ (T - 25) \ Volt$$

Neben $U_2$ max ist auch der Ladestrom $I_2$ max vorgegeben, dessen Größe im Bereich

$$0,05 \ I_{10} \leq I_2 \ max \leq 0,5 \ I_{10}$$

(Bezugsgröße ist der 10stündige Entladestrom) ausgewählt wird, jedoch nicht kleiner sein sollte, als 0,05 $I_{10}$, damit er nicht gänzlich vom $O_2$-Verzehr übernommen wird, sondern eine echte Nachladung bewirkt. Vorzugsweise liegt $I_2$ max zwischen 0,1 $I_{10}$ und 0,3 $I_{10}$.

Ist nun der Ladungszustand der Batterie bei $t_2$ derart, daß sie noch einen Ladestrom der Größe $I_2$ max aufnimmt und sich mit diesem Ladestrom erst allmählich eine höhere Batteriespannung einstellt, findet solange Konstantstromladung durch $I_2$ max statt, bis die Batteriespannung die Höhe von $U_2$ max erreicht hat. Ab diesem Zeitpunkt wird spannungsbegrenzt durch $U_2$ max und bei fallendem Strom bis $t_3$ zu Ende geladen. Dabei zeichnet sich eine für IU-Kennlinien charakteristische Strom-Spannungskurve ab.

Neben dem in Figur 1 dargestellten "Normalfall" können folgende Abweichungen auftreten:
Die eine Abweichung ergibt sich, wenn die Batterie noch während des ganzen Zeitintervalls $t_2 - t_3$ zur Ladungsaufnahme durch den Ladestrom $I_2$ max befähigt ist, ohne daß dieser die Batteriespannung bis $U_2$ max hochtreibt. In diesem Fall wird durchweg mit $I_2$ max nachgeladen.

Bei der anderen Abweichung erreicht die Batteriespannung, da ein Ladestrom $I_2$ max ab $t_2$ nicht mehr aufgenommen werden kann, momentan die im Ladegerät vorgegebene Grenze $U_2$ max. Bei dieser Spannung wird dann mit über das ganze Zeitintervall $t_2 - t_3$ hinweg fallendem Strom zu Ende geladen.

Die Dauer der Nachladung kann zwischen 0,5 und 4 Stunden, vorzugsweise zwischen 0,5 und 1,5 Stunden liegen.

Hat man beispielsweise für die erste Ladestufe einen Konstantstrom $I_1 = 1,25 \cdot I_5$ (für diesen Ladestrom gilt exakt die in Figur 2 eingetragene $U_1$(T)-Kennlinie) gewählt, so ist mit diesem Ladestrom eine Batterie in ca. 7 1/2 Stunden aufladbar, wobei 6 1/2 Stunden auf die erste und zweite Stufe zusammen und 1 Stunde auf die Nachladung entfallen.

Das Ladeverfahren gemäß Erfindung folgt nach dem Gesagten dem Schema zweier aufeinanderfolgender, temperaturgeregelter IU-Ladungen, von denen die zweite IU-Ladung (Nachladung als dritte Verfahrensstufe) erfindungswesentliche Bedeutung besitzt. Mit diesem Verfahren werden beide Elektroden auch in relativ kurzer Zeit vollgeladen. Zugleich kann der unvermeidliche Wasserverlust minimiert werden.

Warum hingegen eine reine IU-Ladung, wie eingangs beschrieben, nicht mit ähnlichem Erfolg auf wartungsfreie Bleibatterien angewendet werden kann, soll im folgenden kurz erläutert werden.

Bei diesen Batterien mit festgelegtem Elektrolyt findet anstelle der Nebenreaktion (4) überwiegend die $O_2$-Verzehrreaktion

$$2 \ Pb + O_2 + 2 \ H_2SO_4 \rightarrow 2 \ PbSO_4 + 2 \ H_2O \quad - (5)$$

statt, wenn auch Reaktion (4) aus thermodynamischen Gründen nicht ganz unterdrückt werden kann und ein geringer Wasserverlust daraus entsteht. Durch die Verzehrreaktion (5) wird die negative Elektrode quasi entladen, gebildetes $PbSO_4$ aber gleichzeitig durch den Ladestrom wieder zu Pb reduziert, d.h. gemäß Reaktionsgleichung (3) geladen. Die negative Elektrode erreicht dadurch nicht das Gasungspotential, sondern bleibt auf dem $Pb/Pb^{2+}$-Potential liegen. Sie liefert damit keinen eigenen Spannungshub, der gemeinsam mit dem Spannungshub der positiven Elektrode als Steuergröße bei einer IU-Ladung dienen könnte. Es bleibt dann nur der positive Spannungshub als Steuergröße, ohne Rücksicht darauf, daß mit höherem Alter der Zelle sich die negative Elektrodenkapazität im allgemeinen schneller erschöpft, d.h. die Negative zur begrenzenden Elektrode wird. Bei Zyklen führt ein derartiges Ladeverfahren, bedingt durch den unterschiedlichen Ladungswirkungsgrad der beiden Elektroden, zum Auseinanderlaufen der Ladezustände der pos. und neg. Elektrode und daher zur unvollständigen Aufladung zur Zelle (Kapazitätsabfall) oder bei erheblicher Überladung zu einem großen Wasser-(Elektrolyt-)Verlust.

Dieser Sachverhalt macht es auch verständlich, daß bei dem erfindungsgemäßen Verfahren durch das Nachführen der oberen Ladungsspannungsgrenze mit der Batterietemperatur der Wasserverlust minimiert werden kann, da eine gleichbleibend hohe Batteriespannung bei hoher Temperatur das unerwünschte Gegenteil bewirkt. Besonders günstig wirkt sich die erfindungsgemäße Maßnahme vor allem bei größeren Anfangsströmen (Schnelladung) in der Ladestufe 1 aus, da sich die Batterie hierbei merklich erwärmt und ihre Ladescharakteristik sich zu verschieben droht. Um so wirksamer kommt dann in Ladestufe 2 die Spannungskorrektur nach der $U_1(T)$-Kennlinie zum Tragen.

**Patentansprüche**

1. Verfahren zum schnellen Aufladen von wartungsfreien Bleibatterien mit festgelegtem Elektrolyten, dadurch gekennzeichnet, daß die Ladung in drei aufeinanderfolgenden Stufen in der Weise erfolgt, daß in der ersten Stufe mit konstantem Strom ($I_1$), welcher dem vier- bis achtstündigem Entladestrom der Batterie entspricht, bis zum Erreichen einer temperaturabhängigen Ladespannung ($U_1(T)$) geladen wird, daß darauf in der zweiten Stufe über eine vorgegebene Zeit, welche zusammen mit der ersten Stufe 4 bis 10 Stunden, vorzugsweise 5 bis 8 Stunden beträgt, spannungsgesteuert und mit der erreichten, nunmehr jedoch an die Batterietemperatur laufend angepaßten Ladespannung ($U_1(T)$) weitergeladen wird und daß in der dritten Stufe, ebenfalls zeitbegrenzt, nach einer IU-Kennlinie nachgeladen wird, wobei der zu Beginn fließende Strom ($I_2$ max) auf Werte zwischen $0,05 \cdot I_{10}$ und $0,5 \cdot I_{10}$ begrenzt ist, wobei $I_{10}$ dem 10 stündigen Entladestrom der Batterie entspricht, und die maximale Batteriespannung ($U_2$ max) auf einen Wert begrenzt ist, welcher um 2% bis 8%, vorzugsweise ca. 5% höher liegt als die Ladespannung ($U_1(T)$).

2. Verfahren nach Anspruch 1, dadurch gekennzeichnet, daß die Dauer der dritten Stufe 0,5 bis 4 Stunden, vorzugsweise 0,5 bis 1,5 Stunden, beträgt.

3. Verfahren nach den Ansprüchen 1 und 2, dadurch gekennzeichnet, daß der maximale Nachladestrom ($I_2$ max) von der Größe $0,1\ I_{10}$ bis $0,3 \cdot I_{10}$ ist.

4. Verfahren nach den Ansprüchen 1 bis 3, dadurch gekennzeichnet, daß die temperaturabhängige Ladespannung während der zweiten und dritten Ladestufe nach Maßgabe einer Spannungs-Temperatur-Kennlinie ($U_1(T)$), die in ein Kennlinienfeld von bestimmter, ladestromstärkebedingter Spannungsbreite eingebettet ist, ständig nachgeregelt wird.

5. Verfahren nach den Ansprüchen 1 bis 4, dadurch gekennzeichnet, daß zur Ermittlung der aktuellen Ladespannung ($U_1(T)$) die Batterietemperatur an geeigneter Stelle, vorzugsweise im Innern einer repräsentativen Batteriezelle, zwischen zwei Zellen einer Batterie oder auf dem Polverbinder zweier Zellen gemessen wird.

**Claims**

1. Process for rapidly charging maintenance-free lead batteries having set electrolyte, characterized in that charging is carried out in three successive stages such that in the first stage charging is carried out at a constant current ($I_1$), which corresponds to the four- to eight-hour discharge current of the battery, until a temperature-dependent charge voltage ($U_1(T)$) is reached, in that subsequently in the second stage over a predetermined period of time, which together with the first stage is 4 to 10 hours, preferably 5 to 8 hours, charging is continued in voltage-controlled manner and at the charge voltage ($U_1(T)$) achieved, which is however now continuously matched to the battery temperature, and in that in the third stage, which is also time-limited, further charging is carried out in accordance with an IU characteristic, the current ($I_2$ max) flowing initially being limited to values of between $0.05 \times I_{10}$ and $0.5 \times I_{10}$, where $I_{10}$ corresponds to the 10-hour discharge current of the battery, and the maximum battery voltage ($U_2$ max) being limited to a value which is 2% to 8%, preferably approximately 5% higher than the charge voltage ($U_1(T)$).

2. Process according to Claim 1, characterized in that the duration of the third stage is 0.5 to 4 hours, preferably 0.5 to 1.5 hours.

3. Process according to Claims 1 and 2, characterized in that the maximum subsequent charge current ($I_2$ max) is in the order of $0.1 \times I_{10}$ to $0.3 \times I_{10}$.

4. Process according to Claims 1 to 3, characterized in that the temperature-dependent charge voltage is constantly readjusted during the second and third charge stage in accordance with a voltage/temperature characteristic ($U_1(T)$) which is within a characteristic field of a particular voltage width which is dependent on the strength of the charge current.

5. Process according to Claims 1 to 4, characterized in that in order to determine the charge voltage ($U_1(T)$) at any given moment, the battery temperature is measured at a suitable point, preferably in the interior of a representative battery cell, between two cells of a battery or on the pole connector of two cells.

**Revendications**

1. Procédé pour charger rapidement des batteries au plomb sans entretien avec électrolyte immobilisé, procédé caractérisé en ce que la charge s'effectue en trois phases successives de façon que dans la première phase on charge avec un courant constant $(I_1)$ qui correspond au courant de décharge de la batterie pendant 4 à 8 heures, jusqu'à ce qu'on atteigne une tension de charge $(U_1(T))$ dépendant de la température, en ce que dans la seconde phase on continue à charger, sous contrôle de tension et avec la tension de charge $(U_1(T))$ précédemment atteinte, mais désormais adaptée en continu à la température de la batterie, et ceci pendant un temps prédéfini qui est conjointement avec la première phase de 4 à 10 heures, de préférence de 5 à 8 heures, et en ce que dans la troisième phase, également limitée dans le temps, on charge selon une courbe caractéristique IU, tandis qu'un courant $(I_2max)$ circulant au début est limité à des valeurs comprises entre $0{,}05 \cdot I_{10}$ et $0{,}5 \cdot I_{10}$, $I_{10}$ correspondant au courant de décharge de la batterie en dix heures, et la tension maximale de la batterie $(U_2max)$ est limitée à une valeur qui est supérieure de 2 % à 8 %, de préférence d'environ 5 %, à la tension de charge $(U_1(T))$.

2. Procédé selon la revendication 1, caractérisé en ce que la durée de la troisième phase est de 0,5 heure à 4 heures, de préférence de 0,5 heure à 1,5 heure.

3. Procédé selon les revendications 1 et 2, caractérisé en ce que l'importance du courant de recharge $(I_2max)$ va de $0{,}1\ I_{10}$ à $0{,}3\ I_{10}$.

4. Procédé selon les revendications 1 à 3, caractérisé en ce que la tension de charge dépendant de la température est constamment réajustée pendant la deuxième et la troisième phases de charge selon une courbe caractéristique tension-température $(U_1(T))$ qui est incluse dans un champ caractéristique d'une largeur de tension déterminée, conditionnée par l'intensité du courant de charge.

5. Procédé selon les revendications 1 à 4, caractérisé en ce que pour déterminer la tension de charge actuelle $(U_1(T))$, la température de la batterie est mesurée à un emplacement approprié, de préférence à l'intérieur d'un élément représentatif de la batterie, entre deux éléments d'une batterie, ou bien sur la jonction de pôles de deux éléments.

Fig. 1

Fig. 2